# EUROPÄISCHE PATENTANMELDUNG

(11) **EP 1 020 746 A2**
(43) Veröffentlichungstag der Anmeldung: **19.07.2000**
(21) Anmeldenummer: 00100492.8
(22) Anmeldetag: 11.01.2000
(51) Int. Cl.: G02B 6/42, G02B 6/38

(54) **Lichtleitfaser-Steckverbinder**

(30) Priorität: 15.01.1999 DE 19901474
(71) Anmelder: Delphi Technologies, Inc., Troy, MI 48007 (US)
(72) Erfinder: Halbach, Paul Gerhard J., 42369 Wuppertal (DE); Haack, Albrecht, 42369 Wuppertal (DE); Sikora, Andreas, 58099 Hagen (DE)
(74) Vertreter: Manitz, Finsterwald & Partner

(57) **Zusammenfassung**

Ein Steckverbinder 10 für Lichtleiter umfaßt ein Steckteil 12 und ein Aufnahmeteil 14, wobei das Steckteil 12 mit wenigstens einem insbesondere zwingenartigen optischen Verbindungselement 16 versehen ist, das in eine betreffende Steckaufnahme 18 eines in das Aufnahmeteil 14 einsetzbaren elektrooptischen Moduls 20 axial einsteckbar ist. Das elektrooptische Modul 20 ist von der vom Steckteil 12 abgewandten Rückseite des Aufnahmeteils 14 her axial in das Aufnahmeteil 14 einsetzbar. Der Modul 20 ist beim Einsetzen durch zwischen dem Modul 20 und dem Aufnahmeteil 14 wirkende Ausrichtmittel 30 bezüglich des Aufnahmeteils 14 ausrichtbar und durch Fixiermittel 32 in seiner Endlage fixierbar. Zwischen der Steckaufnahme 18 des Moduls 20 und dem betreffenden optischen Verbindungselement 16 sind Ausrichtmittel 34 vorgesehen, um das optische Verbindungselement 16 beim Einstecken bezüglich des Moduls 20 auszurichten.

## Beschreibung

Die Erfindung betrifft einen Steckverbinder für Lichtleiter, mit einem Steckteil und einem Aufnahmeteil, wobei das Steckteil mit wenigstens einem insbesondere zwingenartigen optischen Verbindungselement versehen ist, das in eine betreffende Steckaufnahme eines in das Aufnahmeteil einsetzbaren elektrooptischen Moduls axial einsteckbar ist. Unter einem elektrooptischen Modul ist ein beliebig ausgeführtes Modul zu verstehen, in dem optische Signale in elektrische Signale und/oder elektrische Signale in optische Signale umgewandelt werden. In das jeweilige Aufnahmeteil können ein oder auch mehrere solche elektrooptischen Module eingesetzt sein.

Bei Steckverbindern der eingangs genannten Art können insbesondere axiale Toleranzen des optischen Verbindungselements und des elektrooptischen Moduls zu einer Beeinträchtigung der optischen Funktion führen.

Ziel der Erfindung ist es, einen Steckverbinder der eingangs genannten Art zu schaffen, bei dem der sich bezüglich der optischen Funktion ergebende Toleranzbereich auf einfache und zuverlässige Weise möglichst klein gehalten ist.

Diese Aufgabe wird nach der Erfindung dadurch gelöst, daß das elektrooptische Modul von der vom Steckteil abgewandten Rückseite des Aufnahmeteils her axial in das Aufnahmeteil einsetzbar ist, daß das elektrooptische Modul beim Einsetzen durch zwischen dem Modul und dem Aufnahmeteil wirkende Ausrichtmittel bezüglich des Aufnahmeteils ausrichtbar und durch Fixiermittel in seiner Endlage fixierbar ist und daß zwischen der Steckaufnahme des Moduls und dem betreffenden optischen Verbindungselement Ausrichtmittel vorgesehen sind, um das optische Verbindungselement beim Einstecken bezüglich des Moduls auszurichten.

Aufgrund dieser Ausbildung ist der sich bezüglich der optischen Funktion ergebende Toleranzbereich auf ein Minimum reduziert, so daß nach einem jeweiligen Zusammenstecken der Verbinderteile stets eine optimale optische Funktion gewährleistet ist. Das beim Einsetzen bezüglich des Aufnahmeteils ausgerichtete elektrooptische Modul wird schließlich durch die Fixiermittel in seiner Endlage fixiert. Ein jeweiliges optisches Verbindungselement wird beim Einstecken bezüglich des Moduls ausgerichtet. Durch die Ausrichtmittel wird insgesamt eine optimale Ausrichtung in allen drei Achsen erreicht und aufrechterhalten.

Bei einer bevorzugten praktischen Ausführungsform des erfindungsgemäßen Steckverbinders umfaßt der Boden der Steckaufnahme des elektrooptischen Moduls einen flachen Anschlagsbereich, gegen den das Verbindungselement mit seinem betreffenden, eine flache Stirnseite aufweisenden Ende durch Anpreßmittel anpreßbar ist. Durch die Anpreßmittel wird somit eine Art Toleranzausgleich erreicht. Grundsätzlich sind Anpreßmittel beliebiger Art verwendbar.

Bei einer bevorzugten praktischen Ausführungsform umfassen die zwischen dem elektrooptischen Modul und dem Aufnahmeteil wirkenden Ausrichtmittel am Modul und am Aufnahmeteil vorgesehene zusammenwirkende, bezüglich der Steckrichtung schräg verlaufende Ausrichtflächen.

Die zwischen der Steckaufnahme des elektrooptischen Moduls und dem betreffenden Verbindungselement wirkenden Ausrichtmittel können eine bezüglich der Steckrichtung schräg verlaufende Innenumfangsfläche der Steckaufnahme umfassen. In diesem Fall ist das in die Steckaufnahme des elektrooptischen Moduls einsteckbare Ende des optischen Verbindungselements vorzugsweise mit wenigstens zwei hinsichtlich ihrer Durchmesser an die schräg verlaufende Innenumfangsfläche der Steckaufnahme angepaßten äußeren Umfangsrippen versehen.

Bei einer zweckmäßigen praktischen Ausführungsform umfaßt das das elektrooptische Modul beaufschlagende Fixiermittel ein dem Aufnahmeteil zugeordnetes schieberartiges Rückteil, durch das das Modul in seine Endlage preßbar und in dieser fixierbar ist. Das Rückteil bezüglich des Aufnahmeteils ist vorzugsweise quer zur Steckrichtung verschiebbar. Dabei kann das Rückteil an seinem in Schieberichtung vorderen Ende mit einer das elektrooptische Modul beaufschlagenden Auflaufschräge versehen sein.

Das Rückteil ist zweckmäßigerweise im Preßsitz gegen das elektrooptische Modul gehalten.

Von Vorteil ist auch, wenn das in die Steckaufnahme des elektrooptischen Moduls eingesteckte Ende des optischen Verbindungselements im Preßsitz in der Steckaufnahme aufgenommen ist. Hierbei genügt in der Regel bereits ein leichter Preßsitz.

Die Steckaufnahme des elektrooptischen Moduls kann einen in Steckrichtung vom Steckteil weg kegelstumpfartig kleiner werdenden kreisförmigen Innenquerschnitt besitzen, wobei die diese Steckaufnahme radial nach außen begrenzende Innenumfangsfläche einen entsprechenden schrägen Verlauf besitzt. In diesem Fall ist es zweckmäßig, wenn die am betreffenden Ende des optischen Verbindungselements vorgesehenen Umfangsrippen jeweils kreisförmig ausgebildet sind und unterschiedliche Außendurchmesser besitzen, die an den kegelstumpfartigen schrägen Verlauf der Innenumfangsfläche angepaßt sind.

Die als Ausrichtmittel zwischen dem elektrooptischen Modul und dem Aufnahmeteil wirkenden schrägen Ausrichtflächen können zumindest abschnittsweise einen zueinander komplementären kegelstumpfartigen Verlauf besitzen.

Eine bevorzugte praktische Ausführungsform des erfindungsgemäßen Steckverbinders zeichnet sich dadurch aus, daß der flache Anschlagsbereich des Bodens der Steckaufnahme ringförmig ausgebildet und der Boden mit einer innerhalb des ringförmigen Anschlagsbereichs angeordneten Vertiefung versehen ist, in die eine dem elektrooptischen Modul zugeordnete Linse hineinragt, die dem angesteckten Ende des betreffenden optischen Verbindungselements gegenüberliegt.

In bestimmten Fällen ist es zweckmäßig, wenn wenigstens ein elektrooptisches Modul vorgesehen ist, das wenigstens zwei Steckaufnahmen für einen jeweiligen optischen Anschluß umfaßt.

In bestimmten Fällen kann es auch von Vorteil sein, wenn wenigstens zwei elektrooptische Module mit jeweils wenigstens einer Steckaufnahme in das Aufnahmeteil einsetzbar sind.

Die Erfindung wird im folgenden anhand von Ausführungsbeispielen unter Bezugnahme auf die Zeichnung näher erläutert; in dieser zeigen:
- Figur 1: eine schematische, teilweise geschnittene Teildarstellung eines Steckverbinders,
- Figur 2: eine vergrößerte Darstellung eines in das Aufnahmeteil des Steckverbinders eingesetzten elektrooptischen Moduls sowie eines mit diesem gekoppelten optischen Verbindungselements,
- Figur 3: eine schematische Darstellung eines mit zwei Steckaufnahmen versehenen elektrooptischen Moduls,
- Figur 4: eine schematische Darstellung eines mit einer Steckaufnahme versehenen elektrooptischen Moduls,
- Figur 5: zwei nebeneinander angeordnete elektrooptische Module sowie zwei mit diesen gekoppelte optische Verbindungselemente,
- Figur 6: eine auseinandergezogene schematische Ansicht des Aufnahmeteils von schräg hinten,
- Figur 7: eine mit der Figur 6 vergleichbare Ansicht des Aufnah-. meteils nach einem Einsetzen des elektrooptischen Moduls,
- Figur 8: eine mit der Figur 6 vergleichbare Ansicht des Aufnahmeteils nach einer Montage des Rückteils,
- Figur 9: eine mit der Figur 6 vergleichbare Ansicht des Aufnahmeteils unmittelbar vor dem Einsetzen einer Mehrzahl von Stiften,
- Figur 10: eine mit der Figur 6 vergleichbare Ansicht des Aufnahmeteils nach dem Einsetzen der Stifte und
- Figur 11: eine Vorderansicht des in der Figur 10 gezeigten montierten Aufnahmeteils ohne optische Verbindungselemente.

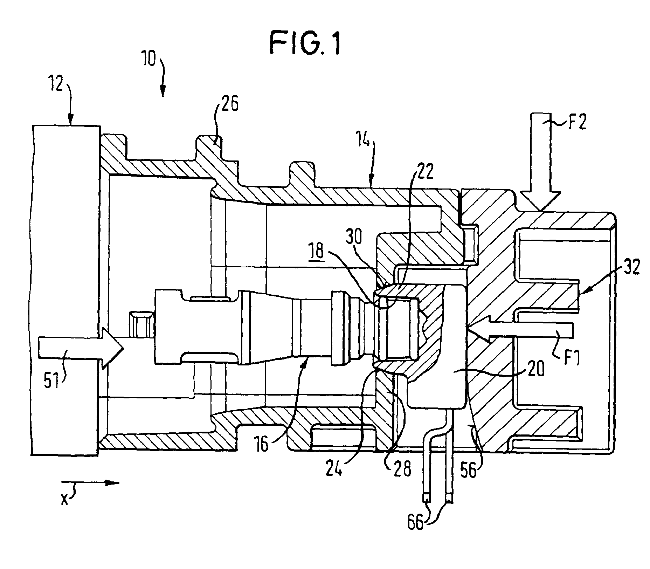

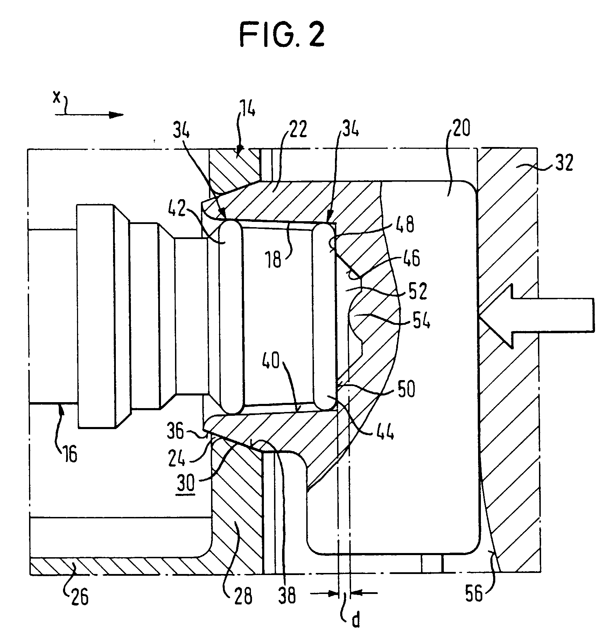

Der in den Figuren 1 und 2 gezeigte Steckverbinder 10 für faseroptische Lichtleiter umfaßt ein Steckteil 12 und ein Aufnahmeteil 14. Das Steckteil 12 ist mit wenigstens einem zwingenartigen optischen Verbindungselement 16 versehen, das am Ende eines jeweiligen Lichtleiters angebracht ist.

Ein jeweiliges optisches Verbindungselement 16 ist in eine jeweilige Steckaufnahme 18 eines in das Aufnahmeteil 14 einsetzbaren elektrooptischen Moduls 20 in Axialrichtung x einsteckbar. Unter einem elektrooptischen Modul ist hierbei ein beliebig ausgeführtes Modul zu verstehen, in dem optische Signale in elektrische Signale und/oder elektrische Signale in optische Signale umgewandelt werden.

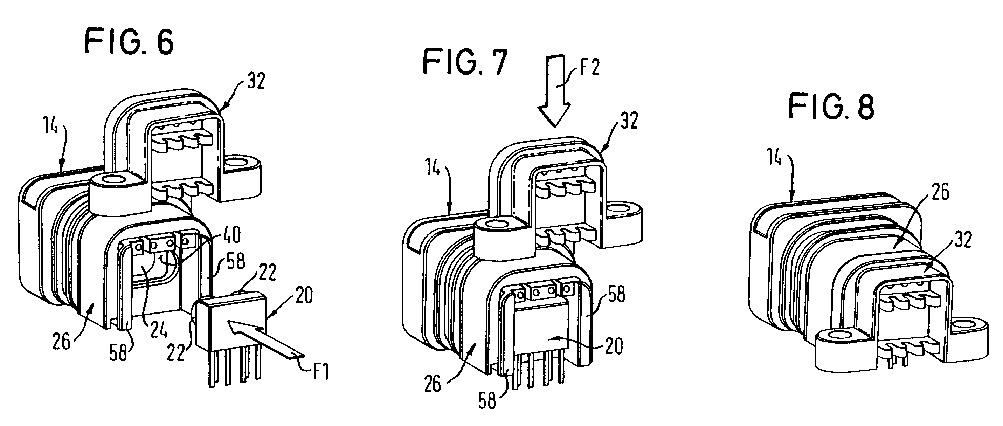

Wie insbesondere auch anhand der Figuren 6 bis 8 zu erkennen ist, ist das elektrooptische Modul 20 von der vom Steckteil 12 angewandten Rückseite des Aufnahmeteils 14 her axial in das Aufnahmeteil 14 einsetzbar. Das Modul 20 ist mit einem axialen Ansatz 22 versehen, dessen freies Ende in eine Öffnung 24 einsetzbar ist, die in einer einem Vorderteil 26 des Aufnahmeteils 14 zugeordneten Querwand 28 ausgebildet ist.

Das Modul 20 wird beim Einsetzen durch zwischen seinem axialen Ansatz 22 und der Öffnung 24 der Querwand 28 wirkende Ausrichtmittel 30 bezüglich des Aufnahmeteils 14 ausgerichtet und durch Fixiermittel in seiner Endlage fixiert, die im vorliegenden Fall ein Rückteil 32 des Aufnahmeteils 14 umfassen.

Überdies sind zwischen einer jeweiligen Steckaufnahme 18 des Moduls 20 und einem betreffenden optischen Verbindungselement 16 Ausrichtmittel 34 vorgesehen. Durch diese Ausrichtmittel 34 wird das optische Verbindungselement 16 beim Einstecken in die Steckaufnahme 18 bezüglich des Moduls 20 ausgerichtet.

Die zwischen dem elektrooptischen Modul 20 und dem Aufnahmeteil 14 wirkenden Ausrichtmittel 30 umfassen am vorderen Ende des axialen Ansatzes 22 des Moduls 20 und an dem Aufnahmeteil 14 vorgesehene zusammenwirkende, bezüglich der mit der Axialrichtung x zusammenfallenden Steckrichtung leicht schräg verlaufende Ausrichtflächen 36 bzw. 38.

Dabei wird die in der Querwand 28 ausgebildete Öffnung 24 durch die schräg verlaufende Ausrichtfläche 38 begrenzt.

Wie am besten anhand der Figur 2 zu erkennen ist, besitzen die als Ausrichtmittel 30 zwischen dem elektrooptischen Modul 20 und dem Aufnahmeteil 14 wirkenden schrägen Ausrichtflächen 36, 38 zumindest abschnittsweise einen zueinander komplementären kegelstumpfartigen Verlauf. Dabei wird der Außendurchmesser des durch die schräge Ausrichtfläche 36 radial nach außen begrenzten vorderen Endes des axialen Ansatzes 22 zum Rückteil 32 hin größer.

Die zwischen der Steckaufnahme 18 des elektrooptischen Moduls 20 und dem betreffenden Verbindungselement 16 wirkenden Ausrichtmittel 34 umfassen eine bezüglich der Steckrichtung x leicht schräg verlaufende Innenumfangsfläche 40 der Steckaufnahme 18.

Überdies ist das in die Steckaufnahme 18 des elektrooptischen Moduls 20 einsteckbare Ende des optischen Verbindungselements 16 mit zwei hinsichtlich ihrer Außendurchmesser an die schräg verlaufende Innenumfangsfläche 40 der Steckaufnahme 18 angepaßten äußeren Umfangsrippen 42, 44 versehen.

Wie am besten anhand der Figur 2 zu erkennen ist, besitzt die die Steckaufnahme 18 radial nach außen begrenzende Innenumfangsfläche 40 einen solchen leicht schrägen Verlauf, daß sich eine Steckaufnahme 18 mit einem in Steckrichtung x vom Steckteil 12 weg kegelstumpfartig kleiner werdenden kreisförmigen Innenquerschnitt ergibt.

Die am betreffenden Ende des optischen Verbindungselements 16 vorgesehenen Umfangsrippen 42, 44 sind jeweils kreisförmig ausgebildet. Sie besitzen unterschiedliche Außendurchmesser, die an den kegelstumpfartig schrägen Verlauf der Innenumfangsfläche 40 angepaßt sind. Entsprechend besitzt die axial weiter innen liegende Umfangsrippe 42 einen größeren Außendurchmesser als die äußere Umfangsrippe 44.

Der Boden 46 der Steckaufnahme 18 des elektrooptischen Moduls 20 umfaßt einen flachen Anschlagsbereich 48, gegen den das Verbindungselement 16 mit seinem betreffenden, eine flache Stirnseite 50 aufweisenden Ende durch in Figur 1 durch einen Pfeil angedeutete Anpreßmittel 52 anpreßbar ist.

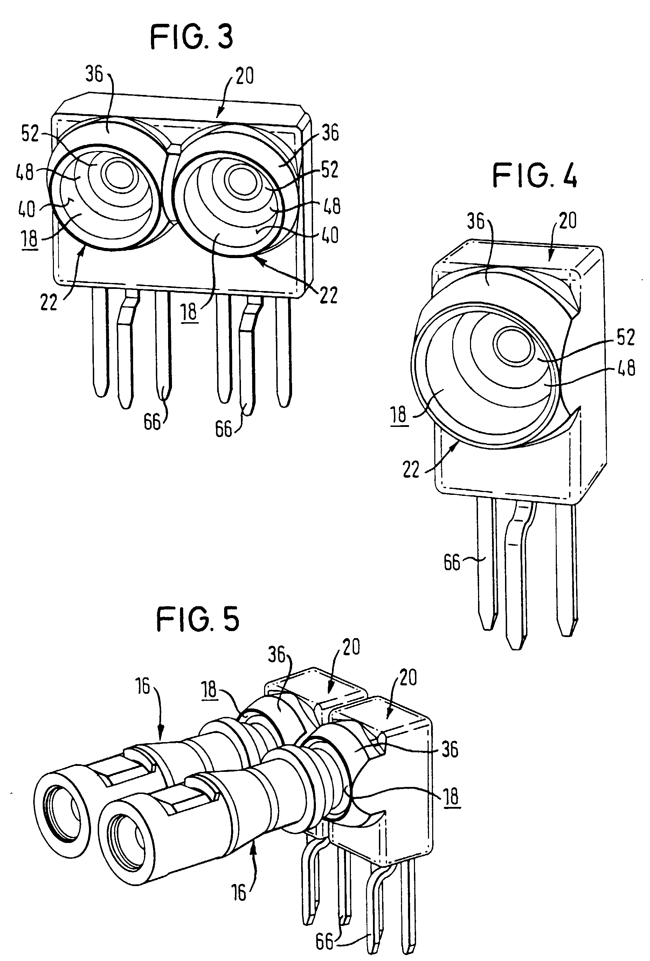

Wie insbesondere auch anhand der Figuren 3 und 4 zu erkennen ist, ist der flache Anschlagsbereich 48 des Bodens 46 einer jeweiligen Steckaufnahme 18 ringförmig ausgebildet. Zudem ist der Boden 46 mit einer innerhalb des ringförmigen Anschlagsbereichs 48 angeordneten Vertiefung 52 versehen, in die eine dem elektrooptischen Modul 20 zugeordnete Linse 54 hineinragt, die dem eingesteckten Ende des betreffenden optischen Verbindungselements 16 gegenüberliegt.

Im vorliegenden Fall ist das elektrooptische Modul 20 durch ein schieberartiges Rückteil 32 des Aufnahmeteils 14 in seine in den Figuren 1 und 2 dargestellte Endlage preßbar und in dieser fixierbar. Eine axiale Verlagerung des an das Aufnahmeteil 14 angepaßten Moduls 20 ist demzufolge nicht mehr möglich. Überdies wird es durch die Ausrichtmittel 30 in der gewünschten Lage gehalten. Durch die Ausrichtmittel wird somit insgesamt eine optimale Ausrichtung in allen drei Achsen erreicht und aufrechterhalten.

Wie insbesondere auch anhand der Figuren 6 bis 8 zu erkennen ist, ist das Rückteil 32 bezüglich des Aufnahmeteils 14 bzw. bezüglich des Vorderteils 26 quer zur Steckrichtung x verschiebbar. An seinem in Schieberichtung vorderen Ende ist es mit einer das elektrooptische Modul 20 beaufschlagenden Auflaufschräge 56 versehen (vgl. insbesondere die Figuren 1 und 2). Am Vorderteil 26 ist das schieberartige Rückteil 32 durch eine in den Figuren 6 und 7 zu erkennende Führung 58 geführt. Das auf das Vorderteil 26 aufgeschobene Rückteil 32 ist schließlich im Preßsitz gegen das elektrooptische Modul 20 gehalten.

Das in die Steckaufnahme 18 des elektrooptischen Moduls 20 eingesteckte Ende des optischen Verbindungselements 16 ist im Preßsitz in der Steckaufnahme 18 aufgenommen. Hier genügt in der Regel ein relativ leichter Preßsitz.

Figur 3 zeigt ein mit zwei Steckaufnahmen 18 versehenes elektrooptisches Modul 20. Die beiden Steckaufnahmen 18 sind jeweils wieder durch eine schräge Innenumfangsfläche 40 radial nach außen begrenzt. Dabei ist jede der beiden Steckaufnahmen 18 wieder innerhalb eines allgemein axialen Ansatzes 22 des elektrooptischen Moduls 20 gebildet. Die beiden axialen Ansätze 22 sind jeweils wieder mit einer äußeren schrägen Ausrichtfläche 36 versehen, die jeweils mit einer betreffenden schrägen Ausrichtfläche 38 des Vorderteils 26 des Aufnahmeteils 14 zusammenwirkt.

In der Figur 4 ist ein elektrooptisches Modul 20 mit lediglich einer Steckaufnahme 18 dargestellt. Im übrigen besitzt dieses Modul 20 zumindest im wesentlichen wieder den gleichen Aufbau wie das in der Figur 3 bzw. das in der Figur 1 dargestellte Modul 20. Einander entsprechende Teile sind mit gleichen Bezugszeichen versehen.

In das Aufnahmeteil 14 können grundsätzlich auch mehrere elektrooptische Module 20 eingesetzt werden. Bei dem in der Figur 5 dargestellten Ausführungsbeispiel sind zwei elektrooptische Module 20 mit jeweils lediglich einer Steckaufnahme 18 nebeneinander angeordnet. Zudem sind zwei in die Steckaufnahmen 18 der beiden Module 20 eingesteckte optische Verbindungselemente 16 zu erkennen. In diesem Fall werden somit zwei Module 20 in das Aufnahmeteil 14 eingesetzt. Die beiden Module 20 sind jeweils von der in der Figur 4 dargestellten Art. Einander entsprechenden Teilen sind wieder gleiche Bezugszeichen zugeordnet.

Figur 6 zeigt das Aufnahmeteil 14 vor der Montage.

Zunächst wird das elektrooptische Modul 20 von der Rückseite her in Richtung des Pfeiles F1 in das Vorderteil 26 eingesetzt (vgl. auch Figur 1). Wie anhand der Figur 6 zu erkennen ist, können die mit mehreren Ansätzen 22 des Moduls 20 zusammenwirkenden Ausrichtflächen des Aufnahmeteils 14 auch durch die entsprechend schräge Innenumfangsfläche 40 einer einzigen Öffnung 24 des Vorderteils 26 gebildet sein.

Sobald das elektrooptische Modul 20 eingesetzt ist, kann das Rückteil 32 in Richtung des Pfeiles F2 (vgl. Figur 7) auf die Rückseite des Vorderteils 26 aufgeschoben werden (vgl. auch Figur 1).

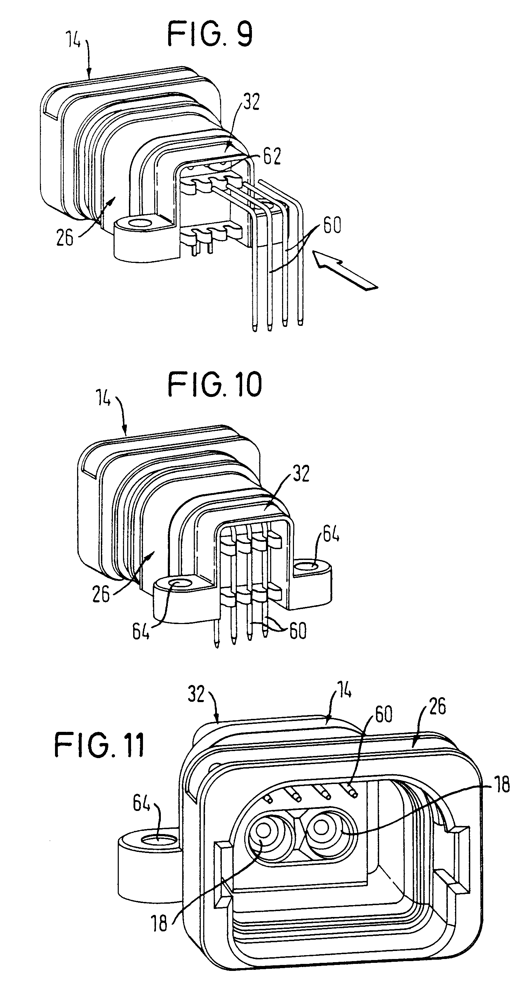

Figur 8 zeigt eine mit den Figuren 6 und 7 vergleichbare Ansicht des Aufnahmeteils 14 nach der Montage des Rückteils 32. Das Aufnahmeteil 14 ist nunmehr bereit für das Einsetzen einer Mehrzahl von Stiften 60 (siehe insbesondere auch die Figuren 9 bis 11), bei denen es sich beispielsweise um eine 064-Pins-Anordnung handeln kann.

Figur 9 zeigt eine mit der Figur 6 vergleichbare Ansicht des Aufnahmeteils 14 unmittelbar vor dem Einsetzen der Stifte 60 nach einer Montage des Rückteils 32, nach der für die Stifte 60 bestimmte Löcher 62 entsprechend ausgerichtet sind.

Figur 10 zeigt eine mit der Figur 6 vergleichbare Ansicht des Aufnahmeteils 14 nach dem Einsetzen der Stifte 60.

Figur 11 zeigt eine Vorderansicht des in der Figur 10 dargestellten montierten Aufnahmeteils 14 ohne optische Verbindungselemente. Das Aufnahmeteil 14 ist nunmehr bereit zur Montage beispielsweise an einer Leiterplatte. Dazu ist im vorliegenden Fall das Rückteil 32 mit entsprechenden Befestigungslöchern 64 versehen.

Grundsätzlich können beliebige Anpreßmittel 52 vorgesehen sein, durch die ein jeweiliges optisches Verbindungselement 16 gegen den flachen Anschlagsbereich 48 gepreßt und/oder gehalten wird. Mit dem Anpressen erfolgt ein Toleranzausgleich. Dabei wird der die optische Funktion betreffende Toleranzbereich reduziert auf den Abstand d zwischen der Endfläche des dem betreffenden optischen Anschluß 16 zugeordneten Lichtleiters und der betreffenden Linse 54 des elektrooptischen Moduls 20. Ein solcher Toleranzbereich kann beispielsweise von etwa 0,2 bis etwa 0,3 mm reichen.

Wie insbesondere anhand der Figur 1 zu erkennen ist, sind die elektrischen Anschlußklemmen 66 des elektrooptischen Moduls 20 im vorliegenden Fall nach unten aus dem Aufnahmeteil 14 herausgeführt.

### Bezugszeichenliste

- 10: Steckverbinder
- 12: Steckteil
- 14: Aufnahmeteil
- 16: optisches Verbindungselement
- 18: Steckaufnahme
- 20: elektrooptisches Modul
- 22: axialer Ansatz
- 24: Öffnung
- 26: Vorderteil
- 28: Querwand
- 30: Ausrichtmittel
- 32: Fixiermittel, Rückteil
- 34: Ausrichtmittel
- 36: schräge Ausrichtfläche
- 38: schräge Ausrichtfläche
- 40: schräge Innenumfangsfläche
- 42: Umfangsrippe
- 44: Umfangsrippe
- 46: Boden
- 48: flacher Anschlagsbereich
- 50: Stirnseite
- 52: Vertiefung
- 54: Linse
- 56: Auflaufschräge
- 58: Führung
- 60: Stifte
- 62: Löcher
- 64: Befestigungslöcher
- 66: elektrische Anschlußklemmen
- F1: Pfeil
- F2: Pfeil
- x: Axialrichtung, Steckrichtung
- d: Abstand

## Patentansprüche

1. Steckverbinder (10) für Lichtleiter, mit einem Steckteil (12) und einem Aufnahmeteil (14), wobei das Steckteil (12) mit wenigstens einem insbesondere zwingenartigen optischen Verbindungselement (16) versehen ist, das in eine betreffende Steckaufnahme (18) eines in das Aufnahmeteil (14) einsetzbaren elektrooptischen Moduls (20) axial einsteckbar ist,
dadurch **gekennzeichnet,**
daß das elektrooptische Modul (20) von der vom Steckteil (12) abgewandten Rückseite des Aufnahmeteils (14) her axial in das Aufnahmeteil (14) einsetzbar ist, daß das elektrooptische Modul (20) beim Einsetzen durch zwischen dem Modul (20) und dem Aufnahmeteil (14) wirkende Ausrichtmittel (30) bezüglich des Aufnahmeteils (14) ausrichtbar und durch Fixiermittel (32) in seiner Endlage fixierbar ist und daß zwischen der Steckaufnahme (18) des elektooptischen Moduls (20) und dem betreffenden optischen Verbindungselement (16) Ausrichtmittel (34) vorgesehen sind, um das optische Verbindungselement (16) beim Einstecken bezüglich des Moduls (20) auszurichten.

2. Steckverbinder nach Anspruch 1,
dadurch **gekennzeichnet,**
daß der Boden (46) der Steckaufnahme (18) des elektrooptischen Moduls (20) einen flachen Anschlagsbereich (48) umfaßt, gegen den das Verbindungselement (16) mit seinem betreffenden, eine flache Stirnseite (50) aufweisenden Ende durch Anpreßmittel (52) anpreßbar ist.

3. Steckverbinder nach Anspruch 1 oder 2,
dadurch **gekennzeichnet,**
daß die zwischen dem elektrooptischen Modul (20) und dem Aufnahmeteil (14) wirkenden Ausrichtmittel (30) am Modul (20) und am Aufnahmeteil (14) vorgesehene zusammenwirkende, bezüglich der Steckrichtung (x) schräg verlaufende Ausrichtflächen (36, 38) umfassen.

4. Steckverbinder nach einem der vorhergehenden Ansprüche,
dadurch **gekennzeichnet,**
daß die zwischen der Steckaufnahme (18) des elektrooptischen Moduls (20) und dem betreffenden optischen Verbindungselement (16) wirkenden Ausrichtmittel (34) eine bezüglich der Steckrichtung (x) schräg verlaufende Innenumfangsfläche (40) der Steckaufnahme (18) umfassen.

5. Steckverbinder nach Anspruch 4,
dadurch **gekennzeichnet,**
daß das in die Steckaufnahme (18) des elektrooptischen Moduls (20) einsteckbare Ende des optischen Verbindungselements (16) mit wenigstens zwei hinsichtlich ihrer Durchmesser an die schräg verlaufende Innenumfangsfläche (40) der Steckaufnahme (18) angepaßten äußeren Umfangsrippen (42, 44) versehen ist.

6. Steckverbinder nach einem der vorhergehenden Ansprüche,
dadurch **gekennzeichnet,**
daß das das elektrooptische Modul (20) beaufschlagende Fixiermittel ein dem Aufnahmeteil (14) zugeordnetes schieberartiges Rückteil (32) umfaßt, durch das das Modul (20) in seine Endlage preßbar und in dieser fixierbar ist.

7. Steckverbinder nach Anspruch 6,
dadurch **gekennzeichnet,**
daß das Rückteil (32) bezüglich des Aufnahmeteils (14) quer zur Steckrichtung verschiebbar ist.

8. Steckverbinder nach Anspruch 7,
dadurch **gekennzeichnet,**
daß das Rückteil (32) an seinem in Schieberichtung vorderen Ende mit einer das elektrooptische Modul (20) beaufschlagenden Auflaufschräge (56) versehen ist.

9. Steckverbinder nach einem der vorhergehenden Ansprüche,
dadurch **gekennzeichnet,**
daß das Rückteil (32) im Preßsitz gegen das elektrooptische Modul (20) gehalten ist.

10. Steckverbinder nach einem der vorhergehenden Ansprüche,
dadurch **gekennzeichnet,**
daß das in die Steckaufnahme (18) des elektrooptischen Moduls (20) eingesteckte Ende des optischen Verbindungselements (16) im Preßsitz in der Steckaufnahme (18) aufgenommen ist.

11. Steckverbinder nach einem der vorhergehenden Ansprüche,
dadurch **gekennzeichnet,**
daß die Steckaufnahme (18) des elektrooptischen Moduls (20) einen in Steckrichtung (x) vom Steckteil (12) weg kegelstumpfartig kleiner werdenden kreisförmigen Innenquerschnitt besitzt und die diese Steckaufnahme (18) radial nach außen begrenzende Innenumfangsfläche (40) einen entsprechenden schrägen Verlauf besitzt.

12. Steckverbinder nach Anspruch 11,
dadurch **gekennzeichnet,**
daß die am betreffenden Ende des optischen Verbindungselements (16) vorgesehenen Umfangsrippen (42, 44) jeweils kreisförmig ausgebildet sind und unterschiedliche Außendurchmesser besitzen, die an den kegelstumpfartig schrägen Verlauf der Innenumfangsfläche (40) angepaßt sind.

13. Steckverbinder nach einem der vorhergehenden Ansprüche,
dadurch **gekennzeichnet,**
daß die als Ausrichtmittel (30) zwischen dem elektrooptischen Modul (20) und dem Aufnahmeteil (14) wirkenden schrägen Ausrichtflächen (36, 38) zumindest abschnittsweise einen zueinander komplementären kegelstumpfartigen Verlauf besitzen.

14. Steckverbinder nach einem der vorhergehenden Ansprüche,
dadurch **gekennzeichnet,**
daß der flache Anschlagsbereich (48) des Bodens (46) der Steckaufnahme (18) ringförmig ausgebildet und der Boden (46) mit einer innerhalb des ringförmigen Anschlagsbereichs (48) angeordneten Vertiefung (52) versehen ist, in die eine dem elektrooptischen Modul (20) zugeordnete Linse (54) hineinragt, die dem eingesteckten Ende des betreffenden optischen Verbindungselements (16) gegenüberliegt.

15. Steckverbinder nach einem der vorhergehenden Ansprüche,
dadurch **gekennzeichnet,**
daß wenigstens ein elektrooptisches Modul (20) vorgesehen ist, das wenigstens zwei Steckaufnahmen (18) für einen jeweiligen optischen Anschluß (16) umfaßt.

16. Steckverbinder nach einem der vorhergehenden Ansprüche,
dadurch **gekennzeichnet,**
daß wenigstens zwei elektrooptische Module (20) mit jeweils wenigstens einer Steckaufnahme (18) in das Aufnahmeteil (14) einsetzbar sind.
